Europäisches Patentamt

European Patent Office

Office européen des brevets

(19)

(11) Veröffentlichungsnummer : **0 414 685 B1**

(12)

# EUROPÄISCHE PATENTSCHRIFT

(45) Veröffentlichungstag der Patentschrift :
24.03.93 Patentblatt 93/12

(51) Int. Cl.⁵ : **H02G 5/06**

(21) Anmeldenummer : **88909975.0**

(22) Anmeldetag : **13.10.88**

(86) Internationale Anmeldenummer :
**PCT/DE88/00636**

(87) Internationale Veröffentlichungsnummer :
**WO 89/11746 30.11.89 Gazette 89/28**

(54) **ROHRLEITERVERBINDUNG ZWISCHEN EINER METALLGEKAPSELTEN, DRUCKGASISOLIERTEN HOCHSPANNUNGSSCHALTANLAGE UND EINEM TRANSFORMATOR.**

(30) Priorität : **17.05.88 DE 3817217**

(43) Veröffentlichungstag der Anmeldung :
**06.03.91 Patentblatt 91/10**

(45) Bekanntmachung des Hinweises auf die
Patenterteilung :
**24.03.93 Patentblatt 93/12**

(84) Benannte Vertragsstaaten :
**AT CH DE FR GB IT LI NL SE**

(56) Entgegenhaltungen :
**SE-B- 442 469**

(73) Patentinhaber : **SIEMENS
AKTIENGESELLSCHAFT
Wittelsbacherplatz 2
W-8000 München 2 (DE)**

(72) Erfinder : **HAARHUIS, Jürgen
Jahnstrasse 17
W-1000 Berlin 61 (DE)**
Erfinder : **LORENZ, Dieter
Gärtnerstrasse 1B
W-1000 Berlin 45 (DE)**

EP 0 414 685 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Rohrleiterverbindung zwischen einer metallgekapselten, druckgasiolierten Hochspannungsschaltanlage und einem Transformator, die insbesondere einen Kompensator enthält und bei welcher der Rohrleiter auf der einen Seite mit einem Anschluss der metallgekapselten, druckgasisolierten Hochspannungsschaltanlage und auf der anderen Seite mit einem Transformatorabgang verbunden ist.

Derartige Rohrleiterverbindungen sind üblich und z. B. aus der EP-A-0 055 094 bekannt. Der in der Rohrleiterverbindung vorhandene Kompensator läßt einen gewissen Toleranzbereich für die Befestigung des Rohrleiters an den angrenzenden Anschlußstutzen zu. Dieser mögliche Toleranzbereich hängt von den durch die Abmessung des Kompensators vorgegebenen zulässigen Bewegungen in Richtung seiner Längsachse $\pm \Delta L$ und den zulässigen Winkelbewegungen $\pm \alpha$ ab. Dabei ist der durch die Winkelbewegungen erfaßbare Toleranzbereich außerdem noch abhängig von dem Abstand L zwischen dem Kompensator und dem zum Anschluß dienenden Flanschstutzen. Somit ist der mögliche Toleranzausgleich in erster Linie von der Dimensionierung des Kompensators abhängig, der ein aufwendiges Bauteil ist und der die Tendenz aufweist, bei großen axial zulässigen Bewegungen wegen der dann erforderlichen großen Anzahl von Faltenwindungen leicht ausknicken zu können, so daß nur die zulässige Axialauslenkung des Kompensators für den Toleranzausgleich ausgenutzt werden kann.

Aber auch bei Rohrleiterverbindungen ohne Kompensator ergibt sich manchmal die Notwendigkeit, einen ausgleichbaren Toleranzbereich für den Anschlußflansch des Transformatorabgangs zu schaffen.

Gerade bei den in Elektrizitätsversorgungsanlagen vorhandenen Transformatoren, die an metallgekapselte, druckgasisolierte Hochspannungsschaltanlagen angeschlossen sind, besteht aber in Schadenfällen die Forderung, zwecks Erhöhung der betriebstechnischen Verfügbarkeit, einen Transformator möglichst schnell auszuwechseln, weshalb der mit der Rohrleiterverbindung (mit oder ohne Kompensator) abzudeckende Toleranzbereich sehr groß werden kann, weil die Abmessungen der Anschlußstellen der Transformatorabgänge unterschiedlich sein können.

Der Erfindung liegt somit die Aufgabe zugrunde, eine Rohrleiterverbindung mit oder ohne Kompensator zwischen einem Transformator und einer metallgekapselten, druckgasisolierten Hochspannungsschaltanlage so zu gestalten, daß mit möglichst geringem Aufwand ein großes ausgleichbares Toleranzfeld für die Befestigung an dem Flanschstutzen des Transformatorabgangs geschaffen wird.

Zur Lösung dieser Aufgabe ist bei einer Rohrleiterverbindung der eingangs beschriebenen Art mit Kompensator gemäß der Erfindung der Flanschstutzen des Transformatorabgangs über einen ersten Drehflansch mit einem Ende eines Z- oder U-förmigen gekapselten Rohrleiteranschlußteiles verbunden, dessen anderes Ende über einen zweiten Drehflansch an dem Rohrleiter angeschlossen ist.

Durch den über zwei Drehflansche zwischen die Rohrleiterverbindung und dem Transformatorabgang geschalteten Z- oder U-förmigen Rohrleiteranschlußteil kann der Abstand zwischen dem Flanschstutzen des Transformatorabgangs und dem mit einem seitlichen Flanschstutzen versehenen Rohrleiter in Axialrichtung, d. h. in Richtung der Längsachse des Rohrleiters, durch ein Verdrehen um die Mittelachse des zweiten Drehflansches ausgeglichen werden. Der Mittelteil des gekapselten Z- oder U-förmigen Rohrleiteranschlußteils stellt sich dann entsprechend schräg. Dadurch ist der mögliche ausgleichbare Toleranzbereich nicht mehr durch die zulässige Bewegung des Kompensators in axialer Richtung begrenzt, sondern der mögliche Toleranzbereich ist durch den Abstand zwischen den Mittelpunkten der beiden Drehflansche und durch die zulässige Winkelauslenkung des Kompensators gegeben und hat eine ellipsoidale Form. Mithin kann die zulässige Axialbewegung des Kompensators vernachlässigt werden.

Dadurch kann trotz eines möglichst groß gewünschten Toleranzbereiches für die Befestigung am Anschlußstutzen des Transformatorabgangs der Kompensator klein gehalten werden, was den Aufwand für die Rohrleiterverbindung verringert, trotzdem aber den Austausch von Transformatoren mit unterschiedlich liegenden Anschlußstutzen erlaubt.

Weist der Transformator eine Anschlußfläche seines Flanschstutzens auf, die parallel zur Stirnfläche des Rohrleiters verläuft, so erhält man einen entsprechenden ausgleichbaren ellipsoidalen Toleranzbereich bei Anschluß des zweiten Drehflansches an die Stirnfläche des Rohrleiters. Dieser Toleranzbereich liegt in einer parallel zur Stirnfläche des Rohrleiters verlaufenden Ebene.

Eine weitere, dazu rechtwinklig stehende Ebene des ausgleichbaren Toleranzbereichs ergibt sich bei Anschluß eines Z- oder U-förmig gekapselten Rohrleiteranschlußteils über den ersten Drehflansch an der Stirnfläche des Transformatorabgangs, wenn die Stirnfläche des Transformatorabgangs unterhalb des Rohrleiters liegt und der Rohrleiter einen seitlichen Flanschstutzen aufweist.

In zweckmäßiger Weise wird der Kompensator in dieser Rohrleiterverbindung benachbart zum Anschluß der metallgekapselten, druckgasisolierten Hochspannungsschaltanlage angeordnet, damit die zulässige Winkelauslenkung zu einem möglichst großen ausgleichbaren Toleranzbereich ausgenutzt werden kann.

Gemäß der weiteren Erfindung sind zur Lösung der Aufgabenstellung bei einer Rohrleiterverbindung der eingangs beschriebenen Art ohne Kompensator der Transformatorabgang und der Rohrleiter jeweils über einen Drehflansch mit einem Ende eines Z-förmigen, gekapselten Rohrleiteranschlußteils verbunden und die beiden anderen Enden der Z-förmigen Rohrleiteranschlußteile sind untereinander durch einen weiteren Drehflansch verbunden.

Dadurch wird der ausgleichbare Toleranzbereich zu einer Kreisringfläche vergrößert und der durch einen Kompensator gegebene Aufwand entfällt. Entsprechend der Lage der jeweiligen Anschlußfläche des Transformatorabgangs - seitlich, stirnseitig oder unterhalb des Rohrleiters - liegen die ausgleichbaren Toleranzbereiche ebenfalls in drei rechtwinklig zueinander stehenden Ebenen.

Es empfiehlt sich, die beiden Z-förmigen gekapselten Rohrleiteranschlußteile untereinander gleich zu wählen. Dadurch ergibt sich als ausgleichbarer Toleranzbereich eine geschlossene Kreisfläche.

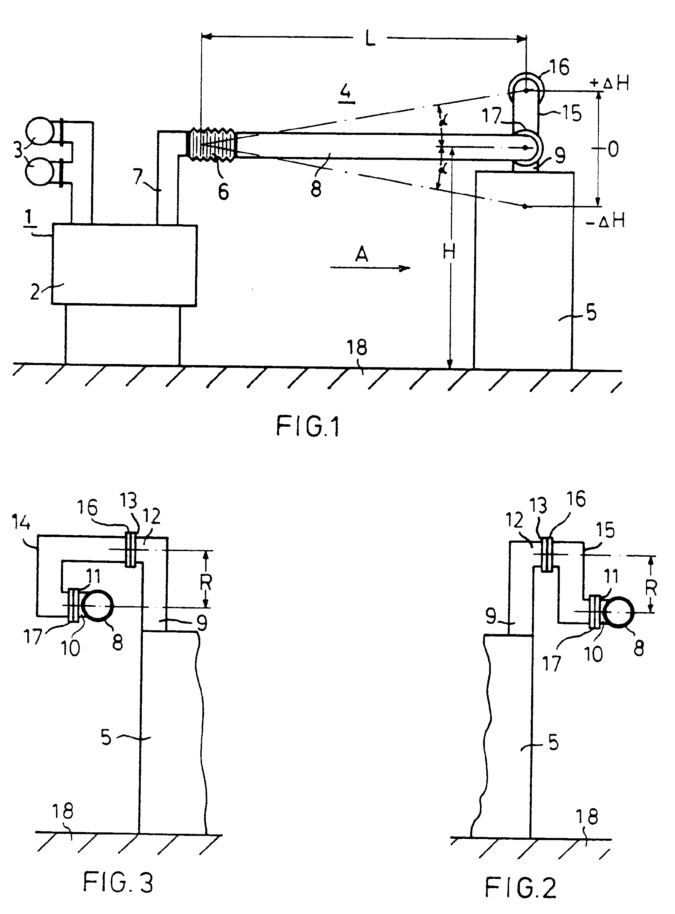

Im folgenden sei die Erfindung noch anhand der in den Figuren 1 bis 9 schematisch dargestellten Ausführungsbeispiele näher erläutert.

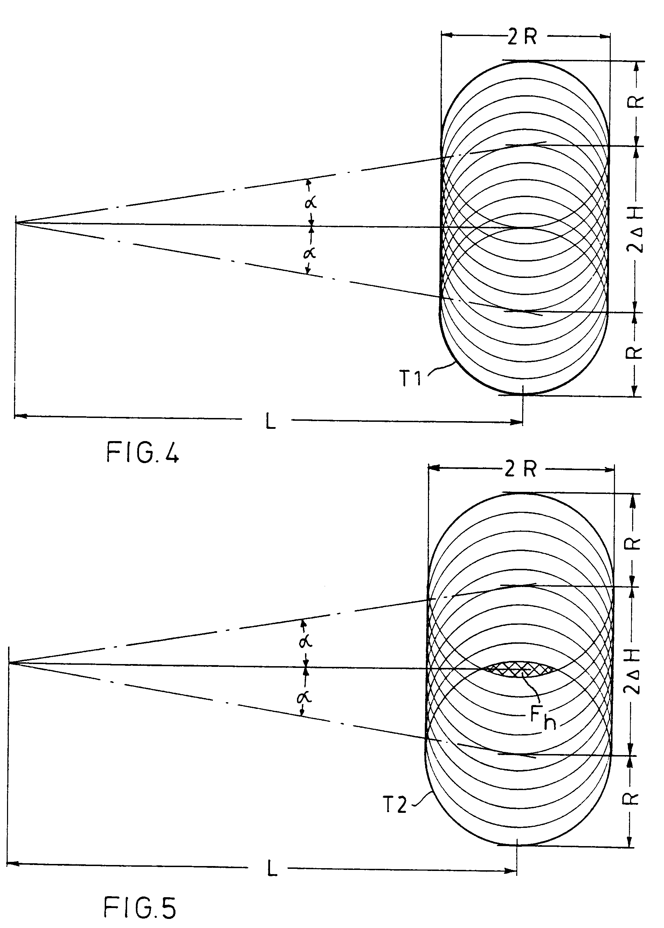

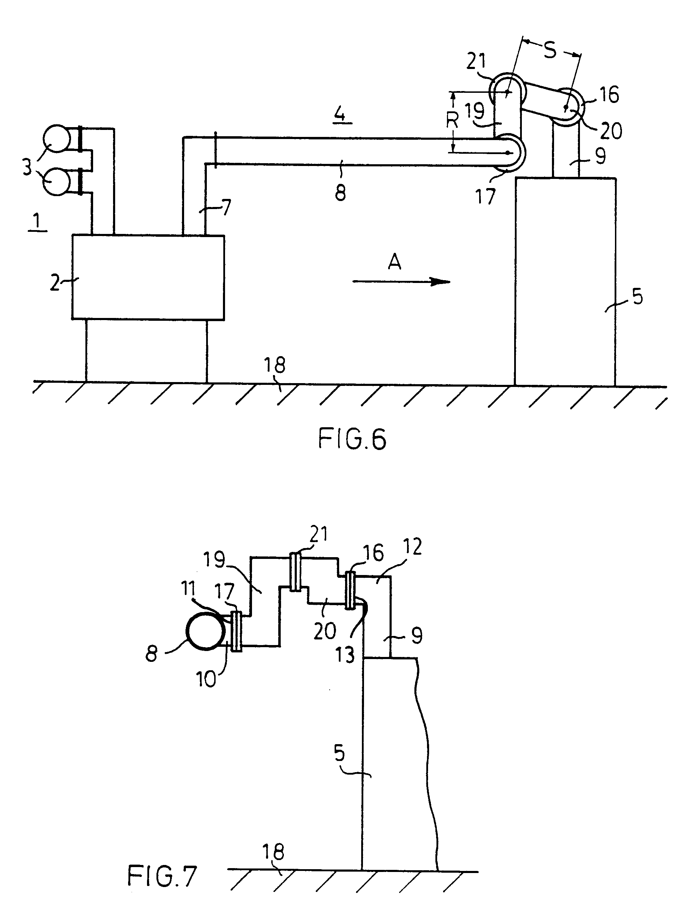

Die Figuren 1 und 6 zeigen den prinzipiellen Aufbau einer gemäß der Erfindung ausgebildeten Rohrleiterverbindung zwischen einer metallgekapselten, druckgasisolierten Hochspannungsschaltanlage und einem Transformator. Die Figuren 2, 3 und 7 zeigen jeweils eine Ansicht A auf den Transformator mit angeschlossener Rohrleiterverbindung in abgewandelten Ausführungsformen. Die Figuren 4, 5 und 8, 9 zeigen schematisch die möglichen ausgleichbaren Toleranzbereiche einer Anordnung nach Figur 1 oder 6 in Abhängigkeit von den Abmessungen der Rohrleiterverbindungen.

Figur 1 zeigt eine metallgekapselte, druckgasisolierte Hochspannungsschaltanlage 1 bestehend aus einem Druckbehälter 2 mit einem Leistungsschalter und einem Doppelsammelschienensystem 3. Diese ist über eine Rohrleiterverbindung 4 an dem Transformator 5 angeschlossen. Die Rohrleiterverbindung 4 enthält einen Kompensator 6, der benachbart zum Anschluß 7 der metallgekapselten, druckgasisolierten Hochspannungsschaltanlage 1 angeordnet und an diesem befestigt ist.

Der Rohrleiter 8 der Rohrleiterverbindung 4 erstreckt sich zwischen dem Kompensator 6 und dem Transformatorabgang 9 und endet in einem rechtwinklig zu seiner Längsachse ausgerichteten Flanschstutzen 10, dessen Anschlußfläche 11 in einer parallel zur Ebene der Längsachse des Rohrleiters 8 verlaufenden Ebene liegt. Desgleichen weist der Transformatorabgang 9 einen seitlichen, rechtwinklig zu seiner Längsachse verlaufenden Flanschstutzen 12 auf, dessen Anschlußfläche 13 ebenfalls in einer Ebene liegt, die parallel zur Ebene der Längsachse des Transformatorabgangs 9 verläuft. Zwischen den Mittelachsen der Flanschstutzen 10 am Rohrleiter 8 und 12 am Transformatorabgang 9 besteht ein Höhenunterschied R, der in den Figuren 2 und 3 durch Pfeile angedeutet ist.

Zur Verbindung zwischen dem Rohrleiter 8 und dem Transformatorabgang 9 dient, je nach Lage des Transformators 5 gegenüber dem Rohrleiter 8, ein U-förmiges, gekapseltes Rohrleiteranschlußteil 14 (Figur 3) oder ein Z-förmiges gekapseltes Rohrleiteranschlußteil 15 (Figur 2), das den Abstand R zwischen den Mittelachsen des Flanschstutzens 10 am Rohrleiter 8 und des Flanschstutzens 12 am Transformatorabgang 9 überbrückt. Diese Z- (15) bzw. U- (14) förmigen, gekapselten Rohrleiteranschlußteile sind an einem Ende mit dem Flanschstutzen 12 des Tranformatorabgangs 9 über einen ersten Drehflansch 16 verbunden. Das andere Ende des gekapselten Rohrleiteranschlußteils 14, 15 ist jeweils über einen zweiten Drehflansch 17 an dem Flanschstutzen 10 des Rohrleiters 8 angeschlossen. Der Abstand der Mittelachsen beider Drehflansche 16, 17 entspricht also R.

Diese Drehflansche 16, 17 sind übliche Bauteile bei druckgasisolierten, metallgekapselten Hochspannungsschaltanlagen und ermöglichen ein Verdrehen der über sie verbundenen Teile gegeneinander. Dies bedeutet, daß bei einer festgegebenen Höhe H der Längsachse des Rohrleiters 8 über dem Fundament 18, die in Figur 1 durch Pfeile angedeutet ist, das Z- oder U-förmige gekapselte Rohrleiteranschlußteil 14, 15 um den Flanschstutzen 10 gedreht werden kann, so daß der Flanschstutzen 12 des Transformatorabgangs 9 auf dem Kreis mit dem Radius R liegen könnte, der somit eine wesentliche Bestimmungsgröße für das ausgleichbare Toleranzfeld $T_1$ bzw. $T_2$ (siehe Figuren 4 und 5) darstellt.

Das ausgleichbare Toleranzfeld $T_1$ bzw. $T_2$ ist aber nicht nur von dem Radius R abhängig, sondern auch durch die mögliche Winkelbewegung $\pm \alpha$ des Kompensators 6 begrenzt. Dieser Kompensator 6 läßt einen von seinen Abmessungen bestimmten zulässigen Winkel $\alpha$ (durch Pfeile in Figur 1 dargestellt) zu, um den der Kompensator 6 winklige Bewegungen oberhalb bzw. unterhalb der Längsachse des Rohrleiters 8 ausüben kann. Dies bedeutet, daß bei einer Länge L der Rohrleiterverbindung 4, gegeben durch den Kompensator 6 und den Rohrleiter 8, infolge des zulässigen Winkels $\alpha$ zum Ausschwenken des Kompensators 6 die Längsachse des Flanschstutzens 10 des Rohrleiters 8 eine Vertikalbewegung nach oben oder nach unten durchführen kann, die maximal den Betrag $+ \Delta H$ bzw. $- \Delta H$ aufweisen darf (siehe Figur 1). Dabei ist $H = L \cdot \tan \alpha$.

Aus dieser Abhängigkeit des zulässigen ausgleichbaren Toleranzfeldes $T_1$, $T_2$ von den Größen L, H, R und dem Winkel $\alpha$ ergibt sich bei einem zulässigen Winkel von $\alpha \leq 5°$ und einem Höhenunterschied $R \leq \Delta H = L \cdot \tan \alpha$, d. h. der kleiner oder gleich der zulässigen Höhenabweichung $\Delta H$ ist, ein zulässiges

ausgleichbares Toleranzfeld

$$T_1 = (2 \Delta H \cdot 2 R) + \pi R^2,$$

das in Figur 4 dargestellt ist. Dieses Toleranzfeld $T_1$ ist also abhängig von den Größen $2 \Delta H$ und von dem Radius R und ist völlig in sich geschlossen, so daß alle innerhalb dieses Toleranzfeldes $T_1$ liegende Punkte, die der Lage des Flanschstutzens 12 am Transformatorabgang 9 entsprechen würden, von der Rohrleiterverbindung 4 erfaßt werden könnten.

Abweichend sind die Verhältnisse, wenn der Radius $R > \Delta H = L \cdot \tan \alpha$ ist. In diesem Fall ergibt sich bei einem zulässigen Winkel $\alpha \leqq 5^\circ$ ein Toleranzfeld $T_2$, das in Figur 5 dargestellt ist. Dieses Toleranzfeld $T_2$ ist gleich

$$T_2 = (2 \Delta H \cdot 2 R) + \pi R^2 - F_h.$$

Die Teilfläche $F_h$ ist nicht Bestandteil des ausgleichbaren Toleranzfeldes $T_2$, so daß die Anschlußfläche 13 am Flanschstutzen 12 des Transformatorabgangs 9 nicht innerhalb der Fläche $F_h$ liegen darf.

In den Figuren 6 und 7 ist eine weitere abgewandelte Ausführungsform der Erfindung dargestellt. Für gleiche Teile werden die gleichen Bezugszeichen beibehalten.

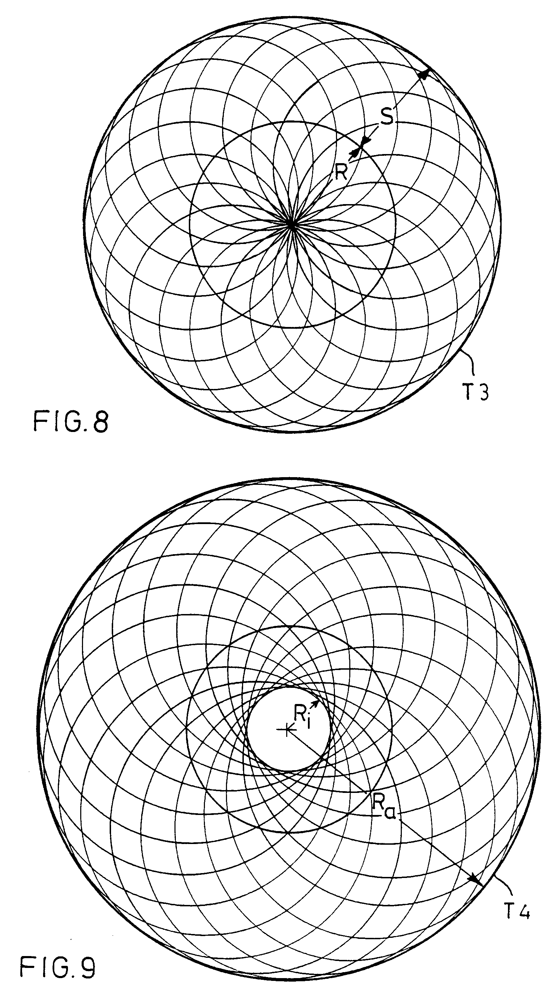

Die Rohrleiterverbindung 4 zwischen der metallgekapselten, druckgasisolierten Hochspannungsschaltanlage 1 und dem Transformator 5 weist keinen Kompensator auf, so daß der Rohrleiter 8 unmittelbar an dem Anschluß 7 der metallgekapselten, druckgasisolierten Hochspannungsschaltanlage angeschlossen ist. Zur Verbindung zwischen dem Rohrleiter 8 und dem Transformatorabgang 9 dienen zwei Z-förmige, gekapselte Rohrleiteranschlußteile 19, 20, die mit dem Flanschstutzen 12 des Transformatorabgangs bzw. mit dem Flanschstutzen 10 des Rohrleiters 8 jeweils über einen Drehflansch 16, 17 und untereinander über den weiteren Drehflansch 21 verbunden sind. Die Schenkellänge R des Z-förmigen, gekapselten Rohrleiteranschlußteils 19 entspricht dem Abstand zwischen den Mittelachsen der Drehflansche 17 und 21 und die Schenkellänge S des Z-förmigen Rohrleiteranschlußteils 20 entspricht dem Abstand zwischen den Mittellinien der Drehflansche 16 und 21. Die Abstände R bzw. S sind in der Figur 6 durch Pfeile angedeutet. Durch Verdrehen der Drehflansche 16, 17, 21 gegeneinander erhält man eine Schrägstellung der beiden Z-förmigen, gekapselten Rohrleiteranschlußteile 19, 10 zueinander, so daß der Anschlußstutzen 12 des Transformatorabgangs 9 innerhalb eines Kreises mit dem Radius R + S liegen könnte. Dieses vergrößerte ausgleichbare Toleranzfeld $T_3$ bzw. $T_4$ (siehe Figuren 8 und 9) ergibt sich aus der Tatsache, daß sich die Mittelachse des Drehflansches 21 ebenfalls verlagern kann.

Das zulässige ausgleichbare Toleranzfeld $T_3$, $T_4$ ist somit allein von den Größen R und S abhängig. Für den Fall, daß R = S ist, ergibt sich das in Figur 8 dargestellte Toleranzfeld $T_3$, das eine geschlossene Kreisfläche mit dem Radius R + S = 2 R = 2 S bildet.

Für den Fall, daß R und S unterschiedliche Werte aufweisen (R < S, R > S), ergibt sich das in Figur 8 dargestellte ausgleichbare Toleranzfeld $T_4$ mit in Form eines Kreisringes. Der äußere Radius $R_a$ dieses Toleranzfeldes $T_4$ weist die Größe R + S auf. Der innere Radius $R_i$ entspricht dem Absolutbetrag der Differenz der Werte beider Radien R und S. In diesem Fall darf der Drehflansch 16 am Transformatorabgang 9 nur innerhalb der Kreisringfläche des Toleranzfeldes $T_4$ liegen.

**Patentansprüche**

1. Rohrleiterverbindung (4) zwischen einer metallgekapselten, druckgasisolierten Hochspannungsschaltanlage (1) und einem Transformator (5), die einen Kompensator (6) enthält und bei welcher der Rohrleiter (8) auf der einen Seite mit einem Anschluss (7) der metallgekapselten, druckgasisolierten Hochspannungsschaltanlage (1) und auf der anderen Seite mit einem Transformatorabgang (9) verbunden ist, **dadurch gekennzeichnet**, daß der Transformatorabgang (9) über einen ersten Drehflansch (16) mit einem Ende eines Z- oder U-förmigen gekapselten Rohrleiteranschlußteils (14, 15) verbunden ist, dessen anderes Ende über einen zweiten Drehflansch (17) an dem Rohrleiter (8) angeschlossen ist.

2. Rohrleiterverbindung nach Anspruch 1, **dadurch gekennzeichnet**, daß der im Rohrleiter (8) liegende Kompensator (6) benachbart zum Anschluß (7) der metallgekapselten, druckgasisolierten Hochspannungsschaltanlage (1) angeordnet ist.

3. Rohrleiterverbindung (4) zwischen einer metallgekapselten, druckgasisolierten Hochspannungsschaltanlage (1) und einem Transformator (5), bei welcher der Rohrleiter (8) auf der einen Seite mit einen Anschluss (7) der metallgekapselten, druckgasisolierten Hochspannungsschaltanlage (1) und auf der anderen Seite mit einem Tansformatorabgang (9) verbunden ist, **dadurch gekennzeichnet**, daß der Transformatorabgang (9) und der Rohrleiter (8) jeweils über einen Drehflansch (16, 17) mit einem Ende eines Z-förmigen, gekapselten Rohrleiteranschlußteils (19, 20) verbunden sind und daß die beiden anderen Enden der Z-förmigen Rohrleiteranschlußteile (19, 20) untereinander durch einen weiteren Drehflansch (21) verbunden sind.

4. Rohrleiterverbindung nach Anspruch 3, **dadurch gekennzeichnet**, daß die beiden Z-förmigen gekapselten Rohrleiteranschlußteile (19, 20) untereinander gleich sind.

**Claims**

1. Tubular-conductor connection (4) between a high-voltage switchgear (1) which is encased in metal and is insulated by compressed gas and a transformer (5), which contains a compensator (6), and in which the tubular conductor (8) is connected on the one side to a terminal (7) of the high-voltage switchgear (1) which is encased in metal and is insulated by compressed gas and on the other side to an outgoing transformer unit (9), characterized in that the outgoing transformer unit (9) is connected by way of a first rotary flange (16) to one end of a Z-shaped or U-shaped encased tubular-conductor connection part (14, 15), the other end of which is attached by way of a second rotary flange (17) to the tubular conductor (8).

2. Tubular-conductor connection according to claim 1, characterized in that the compensator (6) lying in the tubular conductor (8) is arranged adjacent to the terminal (7) of the high-voltage switchgear (1) which is encased in metal and is insulated by compressed gas.

3. Tubular-conductor connection (4) between a high-voltage switchgear (1) which is encased in metal and is insulated by compressed gas and a transformer (5), in which the tubular conductor (8) is connected on the one side to a terminal (7) of the high-voltage switchgear (1) which is encased in metal and is insulated by compressed gas and on the other side to an outgoing transformer unit (9), characterized in that the outgoing transformer unit (9) and the tubular conductor (8) are each connected, by way of a rotary flange (16, 17), to one end of a Z-shaped, encased tubular-conductor connection part (19, 20) and in that the two other ends of the Z-shaped tubular-conductor connection parts (19, 20) are connected to one another by means of a further rotary flange (21).

4. Tubular-conductor connection according to claim 3, characterized in that the two Z-shaped, encased tubular-conductor connection parts (19, 20) are the same as one another.

**Revendications**

1. Liaison tubulaire pour la transmission d'une énergie électrique (4) entre une installation de coupure haute tension (1) à blindage métallique et à isolation par un gaz sous pression, et un transformateur (5), qui comporte un compensateur (6), et dans lequel l'élément tubulaire (8) de la liaison est relié, d'un côté, à un raccord (7) de l'installation de coupure haute tension (1) à blindage métallique et à isolation par un gaz sous pression, et, de l'autre côté, à une sortie (9) du transformateur, caractérisée par le fait que la sortie (9) du transformateur est reliée par une première bride tournante (16) à une extrémité d'un élément (14,15) de la liaison tubulaire, blindé et en forme de Z ou de U et dont l'autre extrémité est reliée par l'intermédiaire d'une seconde bride tournante (10) à l'élément tubulaire (8) de la liaison.

2. Liaison tubulaire pour la transmission d'une énergie électrique suivant la revendication 1, caractérisée par le fait que le compensateur (6) situé dans l'élément tubulaire (8) de la liaison est disposé au voisinage du raccord (7) de l'installation de coupure haute tension (1) à blindage métallique et à isolation par un gaz sous pression.

3. Liaison tubulaire pour la transmission d'une énergie électrique (4) entre une installation de commutation de coupure haute tension (1) à blindage métallique et à isolation par un gaz sous pression, et un transformateur (5) et dans lequel l'élément tubulaire (8) de la liaison est relié, d'un côté, à un raccord (7) de l'installation de coupure haute tension (1) à blindage métallique et à isolation par un gaz sous pression, et de l'autre côté, à une sortie (9) du transformateur, caractérisée par le fait que la sortie (9) du transformateur et l'élément tubulaire (8) de la liaison sont reliés respectivement par une bride tournante (16,17) à une extrémité d'un élément blindé, en forme de Z (19,20), de raccordement à conduit tubulaire et que les deux autres extrémités des éléments, en forme de Z (19,20), de raccordement tubulaire sont réunies entre elles par une troisième bride tournante (21).

4. Liaison tubulaire pour la transmission d'une énergie électrique suivant la revendication 3, caractérisée par le fait que les deux éléments blindés, en forme de Z (19,20), de raccordement tubulaire sont identiques.

FIG.1

FIG. 3

FIG.2

FIG.4

FIG.5

FIG.6

FIG.7

8

FIG.8

FIG.9